# FASCICULE DE BREVET EUROPEEN

(11) **EP 1 852 288 B1**
(45) Date de publication et mention de la délivrance du brevet: **08.07.2009**
(21) Numéro de dépôt: 07107372.0
(22) Date de dépôt: 02.05.2007
(51) Int. Cl.: B60J 7/00, B60J 1/20

(54) **Dispositif d'occultation pour véhicule automobile, à baleines escamotables, et véhicule correspondant**
KFZ-Beschattungsvorrichtung mit klappbaren Spriegeln und dazugehöriges Fahrzeug
Sun shade device with tiltable bows for vehicle and corresponding vehicle

(30) Priorité: 02.05.2006 FR 0603916
(43) Date de publication de la demande: 07.11.2007
(73) Titulaire: Wagon SAS, 79302 Bressuire Cédex (FR)
(72) Inventeur: Fourel, Pascal, 35400 Saint Malo (FR)
(74) Mandataire: Bioret, Ludovic

(56) Documents cités:
- DE-U1- 29 906 315
- DE-U1-2202004 018 29
- FR-A- 2 805 495

## Description

Le domaine de l'invention est celui des véhicules automobiles, et notamment des véhicules présentant une surface vitrée importante, par exemple au niveau du pavillon. Plus précisément, l'invention concerne l'occultation de telles surfaces vitrées, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

On a également proposé des surfaces vitrées multiples, par exemple sous la forme de deux ou trois éléments, dont certains peuvent former des toits ouvrants. De la même façon, des surfaces vitrées importantes peuvent être prévues sur d'autres parties du véhicule, et par exemple à l'arrière, notamment lorsque le véhicule est équipé d'un hayon.

On comprend qu'il est alors nécessaire de prévoir des moyens d'occultation, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées réduites, et verticales ou sensiblement verticales, telles que les vitres arrières ou latérales du véhicule, on connaît également les stores à enrouleur, que l'on peut déployer pour se protéger du soleil. Il n'est malheureusement pas possible de transposer cette technique du store à enrouleur, et plus généralement de tous types de toiles d'occultation, à une surface de grande taille, non verticale, et qui plus est généralement non plane, tels que le sont par exemple les pavillons de véhicules actuels ou futurs.

En effet, si l'on développait horizontalement un store dont les dimensions pourraient être approximativement de 1,5 m en longueur, et d'l m en largeur, pour occulter un pavillon vitré, la toile "pocherait", c'est-à-dire que ses bords latéraux se rapprocheraient légèrement l'un de l'autre, ce qui provoquerait un creux au centre de la toile, des plis ou des froncements, et/ou baillerait, sous l'effet de la gravité. Cela serait bien sûr inacceptable, tant en ce qui concerne le simple aspect visuel et ergonomique que pour l'efficacité de l'occultation, la lumière pouvant alors passer le long des bords.

En outre, les pavillons des véhicules sont le plus souvent non plats mais au contraire incurvés ou galbés, au moins dans le sens de la largeur et également parfois dans le sens de la longueur. À nouveau, le simple déploiement d'une toile d'occultation ne serait alors ni efficace, ni ergonomique, ni esthétique.

Une technique connue de l'art antérieur, par example par le document FR 2 805 495, propose l'utilisation de baleines en plastique ou en métal qui maintiennent la toile d'occultation dans la position déployée souhaitée. Selon une technique connue, les baleines sont logées dans la toile en les glissant à l'intérieur de fourreaux constitués chacun par une pièce de tissu rapportée sur la toile d'occultation et solidarisée par exemple par soudure à celle-ci.

Un des inconvénients de cette technique réside dans son caractère inesthétique. En effet, lorsque les baleines rigides sont glissées dans les fourreaux de toile prévus à cet effet, la toile risque d'être détériorée, ou à tout le moins « marquée », lors de l'enroulement à cause de la présence des baleines rigides.

Un autre inconvénient de cette technique est que l'ensemble formé par la toile et les baleines présente une épaisseur importante, lorsqu'il est enroulé sur le tube enrouleur. Cette épaisseur pose des problèmes pour définir l'emplacement et l'espace nécessaires pour le store alors que dans tous les véhicules automobiles, on souhaite disposer de l'espace intérieur libre le plus important possible.

L'invention a notamment pour objectif de pallier ces inconvénients de l'état de l'art.

Plus précisément, un objectif de l'invention est de fournir une technique d'occultation de surface vitrée mettant en oeuvre des baleines qui ne perturbent pas l'enroulement et le déroulement de la toile, et qui permettent un stockage de cette dernière dans un espace relativement réduit.

L'invention a également pour objectif de fournir une telle technique, qui permet d'éviter le marquage de la toile par les baleines, dans la position repliée.

Un autre objectif de l'invention est de fournir une telle technique, qui soit esthétique et ergonomique, notamment lorsque la toile d'occultation est repliée.

Selon au moins un mode de réalisation particulier, un objectif de l'invention est également de fournir une nouvelle approche de la mise en oeuvre de l'occultation des pavillons vitrés.

Ces objectifs, ainsi que d'autres qui apparaîtront plus clairement par la suite, sont atteints à l'aide d'un dispositif d'occultation pour véhicule automobile, comprenant au moins une toile d'occultation mobile, selon un axe de déploiement, entre une position repliée et au moins une position déployée, comprenant au moins une baleine de soutien de ladite toile d'occultation dans au moins une desdites positions déployées.

Selon l'invention, au moins une desdites baleines est mobile en rotation autour d'un axe de rotation, entre :
- une position de repos, dans laquelle elle s'étend sensiblement parallèlement audit axe de déploiement ;
- une position de maintien de toile, dans laquelle elle s'étend sensiblement perpendiculairement audit axe de déploiement.

Ainsi, les baleines ne sont pas solidaires de la toile, et ne perturbent donc pas l'enroulement, dont l'épaisseur reste réduite. Les baleines ne restent cependant pas en place à demeure, mais sont au contraire escamotées lorsque la toile est déployée.

Selon un mode de réalisation avantageux, chacune desdites baleines mobiles en rotation comprend et/ou coopère avec des moyens d'actionnement assurant un passage de ladite position de repos à ladite position de maintien et/ou un passage de ladite position de maintien à ladite position de repos, lesdits moyens d'actionnement étant entraînés par un élément d'entraînement solidaire de ladite toile d'occultation.

Avantageusement, ledit élément d'entraînement est porté par une barre de tirage de ladite toile d'occultation.

Ainsi, c'est la barre de tirage, lors de son déplacement, qui assure, au fur et à mesure des besoins, la mise en place et le retrait des baleines.

Préférentiellement, l'extrémité libre de chacune desdites baleines mobiles en rotation coopère avec des moyens de butée et/ou de support, dans ladite position de maintien de toile.

Selon un mode de réalisation particulier de l'invention, le dispositif d'occultation comprend deux toiles d'occultation susceptibles de couvrir respectivement une moitié d'une surface à occulter, ladite surface à occulter étant divisée par un longeron central comprenant des moyens de guidage et/ou de maintien de chacune desdites toiles d'occultation.

Cette approche est notamment intéressante du fait que la longueur des baleines est réduite, par rapport à la longueur sur laquelle se déploie la toile, ce qui permet de les répartir efficacement.

On peut notamment prévoir que ce longeron central porte la ou lesdites baleines mobiles en rotation.

Dans ce cas, avantageusement, dans ladite position de repos, la ou lesdites baleines mobiles en rotation sont escamotées dans un logement prévu à cet effet dans ledit longeron central.

Ledit longeron central peut en outre avantageusement présenter au moins trois rails parallèles :
- deux premiers rails de côté, ouverts dans une direction sensiblement parallèle audit pavillon, de part et d'autre dudit longeron, permettant le le guidage et/ou le maintien de chacune desdites toiles d'occultation respectivement ;
- un troisième rail central, ouvert dans une direction sensiblement perpendiculaire audit pavillon, vers le bas dudit véhicule.

L'invention concerne également un véhicule automobile comprenant au moins un dispositif d'occultation tel que décrit ci-dessus.

D'autres caractéristiques et avantages de l'invention apparaîtront à la lecture de la description suivante d'un mode de réalisation préférentiel, donné à titre de simple exemple illustratif et non limitatif, et des dessins annexés parmi lesquels :
- la figure 1 illustre le principe général de mise en oeuvre de l'invention, dans un mode de réalisation à longeron central ;
- la figure 2 présente schématiquement un premier exemple de moyen d'actionnement d'une baleine de la figure 1 ;
- la figure 3 illustre un deuxième mode de réalisation de mis en oeuvre d'une baleine de la figure 1.

L'invention propose donc une nouvelle approche de la mise en oeuvre des baleines permettant de maintenir, ou soutenir, des toiles d'occultation, notamment pour l'occultation de surfaces vitrées de pavillons et/ou de lunettes arrière. Ces baleines ne sont en effet pas solidarisées à la toile d'occultation qu'elles supportent, mais simplement déployées au moment du déploiement de cette toile d'occultation.

Pour cela, elles sont montées mobiles en rotation dans ou au voisinage d'un des rails de guidage de la toile, de façon à prendre deux positions :
- une position escamotée dans laquelle elles se trouvent parallèles au rail, de préférence dans un logement permettant de les escamoter ;
- une position de travail, c'est-à-dire de support, dans laquelle elles ont été déployées perpendiculairement au rail.

Ce déploiement, ainsi que le repli, ou rétractation, se fait donc par simple rotation d'un angle de l'ordre de 90 degrés autour d'un axe prévu à cet effet dans le rail. Il peut être effectué manuellement, ou de façon motorisée. Selon un mode de réalisation avantageux, ce déploiement est actionné par la barre de tirage, qui entraîne la baleine dans un sens ou dans l'autre lorsqu'elle entre en contact avec celle-ci.

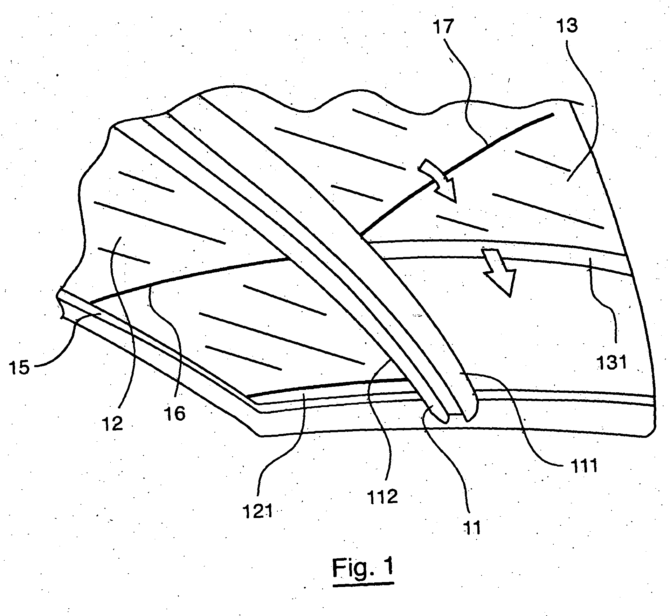

Selon un mode de réalisation préférentiel, illustré par la figure 1, l'invention est mise en oeuvre dans un véhicule présentant un longeron central 11, qui s'étend sensiblement au milieu du véhicule, le long du pavillon. Ce longeron présente deux rails de côtés 111 et 112 qui permettent le déploiement de deux toiles d'occultation 12 et 13, en coopération avec des rails latéraux 15 (un seul des rails est représenté pour simplifier la lecture de cette figure), montés sur la structure du véhicule ou sur un bord latéral du pavillon.

Les toiles 12 et 13 peuvent donc être déployées indépendamment, en fonction des besoins ou des souhaits des utilisateurs. L'ouverture et la fermeture des toiles peuvent être manuelles, par action sur les barres de tirage 131 et 121, ou motorisées. On notera que le longeron central 11 permet le passage de câbles d'actionnement des barres de tirage, ainsi que le cas échéant de câbles électriques.

Le longeron central 11 porte, selon l'invention, des baleines 16, 17, qui sont montées articulées sur celui-ci. La baleine 16 est déployée, c'est-à-dire qu'elle s'étend perpendiculairement à l'axe des rails, et vient supporter la toile 12. L'extrémité libre de cette baleine 16 vient en appui sur le rail latéral 15, ou dans un logement d'accrochage prévu au voisinage de ce rail. Avantageusement, une butée ou une zone de blocage est prévue, pour assurer le bon maintien de la baleine, et éviter toute vibration et source de bruit.

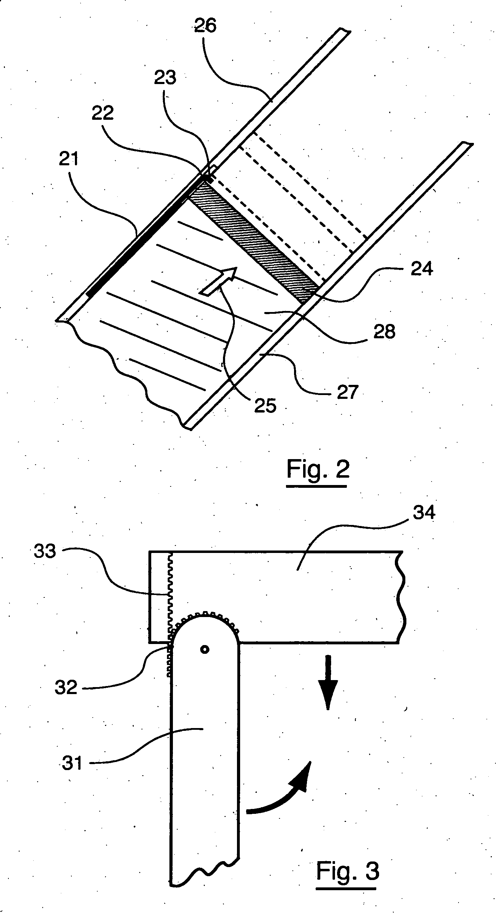

La baleine 17 est illustrée en cours de déploiement, sous l'action de la barre de tirage 131, qui est entrée en contact avec elle. De nombreux mécanismes permettant cet entraînement par la barre de tirage sont envisageables. Les figures 2 et 3 donnent deux exemples de mises en oeuvre, à titre indicatif.

Les baleines au repos ne sont pas visibles : elles ont escamotées à l'intérieur du longeron central 11.

Bien sûr, la technique décrite ci-dessus peut symétriquement être mise en oeuvre dans les rails latéraux : l'axe de rotation est alors prévu dans le rail latéral 15, et l'extrémité libre de la baleine vient en appui sur le rail 111 ou 112 du longeron central.

La figure 2 présente de façon schématique un premier mode de réalisation des moyens d'actionnement d'une baleine. La baleine 21 est présentée en trait plein dans sa position de repos, et en traits pointillés dans sa position de travail.

La baleine est mobile en rotation autour d'un axe 22. Au voisinage de celui-ci, un doigt 23 est prévu, pour venir en contact avec la barre de tirage 24 (ou avec un élément formé sur celle-ci). Lors de sa progression le long des rails 26 et 27, selon la flèche 25, la barre de tirage va entrer en contact avec ce doigt 23, et l'entraîner jusqu'à ce qu'il se trouve parallèle au rail. Cette opération amène la baleine dans la position de travail.

Lors du repli de la toile 28, un second doigt peut être prévu pour effectuer l'opération en sens inverse. On peut également prévoir que la barre de tirage 24 agit directement sur la baleine 21, pour la ramener en position de repos.

Selon un autre mode de réalisation illustré par la figure 3, on prévoit un système de type crémaillère. La baleine 31 comprend alors au voisinage de son axe de rotation un segment denté 32, qui coopère avec une crémaillère 33 formée sur la barre de tirage 34.

Le passage de la barre de tirage dans un sens ou dans l'autre entraîne le déplacement en rotation de la baleine 31, de façon simple et efficace.

En complément, on pourra mettre en oeuvre différents éléments pour contrôler le déplacement des baleines, leur maintien dans la position de repos ou dans la position de travail, ou éventuellement le rapprochement de la baleine et de la toile en position de travail, et un léger éloignement lors du déplacement de la baleine, ...

La technique illustrée figure 1 est avantageuse, du fait que les baleines sont de taille réduite, par rapport à la largeur totale de la surface vitrée à occulter. On comprend qu'il est plus difficile de déployer en rotation des baleines qui devraient couvrir toute la largeur de ce pavillon. Cependant, plusieurs solutions sont envisageables, telles que la mise en oeuvre de baleines formées d'au moins deux éléments coulissants, qui se déploient lors de la rotation pour passer dans la position de travail, et se replient lors du déplacement pour revenir dans la position de repos.

On peut également prévoir d'équiper chacun des rails latéraux, fixés au bord du pavillon ou au voisinage de celui-ci, de demi-baleines, dont les extrémités libres se joignent par tout moyen adéquat, lorsqu'elles sont en position de travail.

## Revendications

1. Dispositif d'occultation pour véhicule automobile, comprenant au moins une toile d'occultation mobile (12, 13, 28), selon un axe de déploiement, entre une position repliée et au moins une position déployée, comprenant au moins une baleine (16, 17, 21, 31) de soutien de ladite toile d'occultation dans au moins une desdites positions déployées,
**caractérisé en ce qu'**au moins une desdites baleines (16, 17, 21, 31) est mobile en rotation autour d'un axe de rotation (22), entre
- une position de repos, dans laquelle elle s'étend sensiblement parallèlement audit axe de déploiement (25) ;
- une position de maintien de toile, dans laquelle elle s'étend sensiblement perpendiculairement audit axe de déploiement.

2. Dispositif d'occultation selon la revendication 1, **caractérisé en ce que** chacune desdites baleines (16, 17, 21, 31) mobiles en rotation comprend et/ou coopère avec des moyens d'actionnement assurant un passage de ladite position de repos à ladite position de maintien et/ou un passage de ladite position de maintien à ladite position de repos,
lesdits moyens d'actionnement étant entraînés par un élément d'entraînement solidaire de ladite toile d'occultation (12, 13, 28).

3. Dispositif d'occultation selon la revendication 2, **caractérisé en ce que** ledit élément d'entraînement est porté par une barre de tirage (121, 131, 24, 34) de ladite toile d'occultation (12, 13, 28).

4. Dispositif d'occultation selon l'une quelconque des revendications 1 à 3,
**caractérisé en ce que** l'extrémité libre de chacune desdites baleines (16, 17, 21, 31) mobiles en rotation coopère avec des moyens de butée et/ou de support, dans ladite position de maintien de toile.

5. Dispositif d'occultation selon l'une quelconque des revendications 1 à 4,
**caractérisé en ce qu'**il comprend deux toiles d'occultation (12, 13) susceptibles de couvrir respectivement une moitié d'une surface à occulter, ladite surface à occulter étant divisé par un longeron central (11) comprenant des moyens de guidage (111, 121) et/ou de maintien de chacune desdites toiles d'occultation.

6. Dispositif d'occultation selon la revendication 5, **caractérisé en ce que** ledit longeron central (11) porte la ou lesdites baleines(16, 17, 21, 31) mobiles en rotation.

7. Dispositif d'occultation selon la revendication 6, **caractérisé en ce que**, dans ladite position de repos, la ou lesdites baleines (16, 17, 21, 31) mobiles en rotation sont escamotées dans un logement prévu à cet effet dans ledit longeron central (11).

8. Dispositif d'occultation selon l'une quelconque des revendications 5 à 7, **caractérisé en ce que** ledit longeron central (11) présente au moins trois rails parallèles :
- deux premiers rails de côté (111, 121), ouverts dans une direction sensiblement parallèle audit pavillon, de part et d'autre dudit longeron, permettant le guidage et/ou le maintien de chacune desdites toiles d'occultation respectivement ;
- un troisième rail central, ouvert dans une direction sensiblement perpendiculaire audit pavillon, vers le bas dudit véhicule.

9. Véhicule automobile **caractérisé en ce qu'**il comprend au moins un dispositif d'occultation selon l'une quelconque des revendications 1 à 8, comprenant au moins une toile d'occultation mobile (12,13, 28), selon un axe de déploiement, entre une position repliée et au moins une position déployée, comprenant au moins une baleine (16,17,21) de soutien de ladite toile d'occultation dans au moins une desdites positions déployées,
**caractérisé en ce qu'**au moins une desdites baleines est mobile en rotation autour d'un axe de rotation, entre :
- une position de repos, dans laquelle elle s'étend sensiblement parallèlement audit axe de déploiement ;
- une position de maintien de toile, dans laquelle elle s'étend sensiblement perpendiculairement audit axe de déploiement.

## Claims

1. Shading device for motor vehicle, comprising at least one fabric shade (12, 13, 28) which is mobile, according to a deployment axis, between a folded-up position and at least one deployed position, comprising at least one bow (16, 17, 21, 31) for supporting said fabric shade in at least one of said deployed positions,
**characterised in that** at least one of said bows (16, 17, 21, 31) is mobile in rotation about an axis of rotation (22) between:
- a resting position in which it extends substantially parallel to said deployment axis (25),
- a position for supporting the fabric in which it extends substantially perpendicular to said deployment axis.

2. Shading device according to Claim 1, **characterised in that** each of said bows (16, 17, 21, 31), which are mobile in rotation, comprises and/or cooperates with actuating means ensuring the passage from said resting position into said supporting position and/or the passage from said supporting position into said resting position,
said actuating means being driven by a drive element firmly attached to said fabric shade (12, 13, 28).

3. Shading device according to Claim 2, **characterised in that** said drive element is borne by a draw bar (121, 131, 24, 34) for said fabric shade (12, 13, 28).

4. Shading device according to any one of Claims 1 to 3,
**characterised in that** the free end of each of said bows (16, 17, 21, 31), which are mobile in rotation, cooperates with abutment and/or supporting means, in said position for supporting the fabric.

5. Shading device according to any one of Claims 1 to 4,
**characterised in that** it comprises two fabric shades (12, 13) capable of respectively covering one half of a surface to be shaded, said surface to be shaded being divided by a central longitudinal member (11) comprising means for guiding (111, 121) and/or supporting each of said fabric shades.

6. Shading device according to Claim 5, **characterised in that** said central longitudinal member (11) bears said bow(s) (16, 17, 21, 31) which are mobile in rotation.

7. Shading device according to Claim 6, **characterised in that** in said resting position, said bow(s) (16, 17, 21, 31), which are mobile in rotation, are retracted into a housing provided to this end in said central longitudinal member (11).

8. Shading device according to any one of Claims 5 to 7,
**characterised in that** said central longitudinal member (11) has at least three parallel rails:
- two first side rails (111, 121) which are open in a direction which is substantially parallel to said roof, on both sides of said longitudinal member, permitting the respective guiding and/or supporting of each of said fabric shades;
- a third central rail, which is open in a direction substantially perpendicular to said roof, towards the bottom of said vehicle.

9. Motor vehicle, **characterised in that** it comprises at least one shading device according to any one of Claims 1 to 8, comprising at least one fabric shade (12, 13, 28) which is mobile, according to a deployment axis, between a folded-up position and at least one deployed position, comprising at least one bow (16, 17, 21) for supporting said fabric shade in at least one of said deployed positions,
**characterised in that** at least one of said bows is mobile in rotation about an axis of rotation, between:
- a resting position, in which it extends substantially parallel to said deployment axis;
- a position for supporting the fabric in which it extends substantially perpendicular to said deployment axis.

## Patentansprüche

1. Beschattungsvorrichtung für ein Kraftfahrzeug, wobei die Beschattungsvorrichtung mindestens eine Abdeckbahn (12, 13, 28), die entlang einer Ausziehachse zwischen einer eingezogenen Position und mindestens einer ausgezogenen Position beweglich ist, und mindestens einen Spriegel (16, 17, 21, 31) zum Stützen der Abdeckbahn in mindestens einer der ausgezogenen Positionen umfasst, **dadurch gekennzeichnet, dass** mindestens einer der Spriegel (16, 17, 21, 31) um eine Drehachse (22) drehbeweglich ist zwischen:
- einer Ruheposition, in der er sich im Wesentlichen parallel zur Ausziehachse (25) erstreckt;
- einer Abdeckbahnhalteposition, in der er sich im Wesentlichen senkrecht zur Ausziehachse erstreckt.

2. Beschattungsvorrichtung nach Anspruch 1, **dadurch gekennzeichnet, dass** jeder dieser drehbeweglichen Spriegel (16, 17, 21, 31) Betätigungsmittel umfasst und/oder mit Betätigungsmitteln zusammenwirkt, die einen Übergang aus der Ruheposition in die Halteposition und/oder einen Übergang aus der Halteposition in die Ruheposition gewährleisten, wobei die Betätigungsmittel von einem Antriebselement angetrieben werden, das fest mit der Abdeckbahn (12, 13, 28) verbunden ist.

3. Beschattungsvorrichtung nach Anspruch 2, **dadurch gekennzeichnet, dass** das Antriebselement von einem Zugstab (121, 131, 24, 34) der Abdeckbahn (12, 13, 28) getragen wird.

4. Beschattungsvorrichtung nach einem beliebigen der Ansprüche 1 bis 3, **dadurch gekennzeichnet, dass** das freie Ende jedes der drehbeweglichen Spriegel (16, 17, 21, 31) in der Abdeckbahnhalteposition mit Anschlag- und/oder Auflagemitteln zusammenwirkt.

5. Beschattungsvorrichtung nach einem beliebigen der Ansprüche 1 bis 4, **dadurch gekennzeichnet, dass** sie zwei Abdeckbahnen (12, 13) umfasst, die jeweils eine Hälfte der zu beschattenden Fläche abdecken können, wobei die zu beschattende Fläche durch einen mittigen Längsträger (11 ) geteilt wird, der Führungsmittel (111, 121) und/oder Haltemittel für jede der Abdeckbahnen umfasst.

6. Beschattungsvorrichtung nach Anspruch 5, **dadurch gekennzeichnet, dass** der mittige Längsträger (11) den oder die drehbeweglichen Spriegel (16, 17, 21, 31 ) trägt.

7. Beschattungsvorrichtung nach Anspruch 6, **dadurch gekennzeichnet, dass** der oder die drehbeweglichen Spriegel (16, 17, 21, 31) in der Ruheposition in eine Aufnahme zurückgezieht werden, die zu diesem Zweck in dem mittigen Längsträger (11) vorgesehen ist.

8. Beschattungsvorrichtung nach einem beliebigen der Ansprüche 5 bis 7, **dadurch gekennzeichnet, dass** der mittige Längsträger (11) mindestens drei parallele Schienen aufweist:
- zwei erste Seitenschienen (111, 121), die in einer im Wesentlichen parallel zum Fahrzeugdach verlaufenden Richtung offen sind, beiderseits des Längsträgers, die das Führen und/oder Halten jeder der Abdeckbahnen ermöglichen;
- eine dritte Mittelschiene, die in einer im Wesentlichen senkrecht zum Dach verlaufenden Richtung, zum Boden des Fahrzeugs hin, offen ist.

9. Kraftfahrzeug, **dadurch gekennzeichnet, dass** es mindestens eine Beschattungsvorrichtung nach einem beliebigen der Ansprüche 1 bis 8 umfasst, die mindestens eine Abdeckbahn (12, 13, 28), die entlang einer Ausziehachse zwischen einer eingezogenen Position und mindestens einer ausgezogenen Position beweglich ist, und mindestens einen Spriegel (16, 17, 21, 31) zum Stützen der Abdeckbahn in mindestens einer der ausgezogenen Positionen umfasst, **dadurch gekennzeichnet, dass** mindestens einer der Spriegel um eine Drehachse drehbeweglich ist zwischen:
- einer Ruheposition, in der er sich im Wesentlichen parallel zur Ausziehachse erstreckt;
- einer Abdeckbahnhalteposition, in der er sich im Wesentlichen senkrecht zur Ausziehachse erstreckt.
